# EUROPEAN PATENT APPLICATION

(11) **EP 3 609 144 A1**
(43) Date of publication of application: **12.02.2020**
(21) Application number: 18187841.4
(22) Date of filing: 07.08.2018
(51) Int. Cl.: H04L 12/801

(54) **AN ETHERNET FRAME PROCESSOR AND RECEIVER**

(71) Applicant: Nokia Solutions and Networks Oy, 02610 Espoo (FI)
(72) Inventor: Pauwels, Bart Joseph, 2018 Antwerpen (BE)
(74) Representative: IP HILLS NV

(57) **Abstract**

An Ethernet frame processor (191) for backwards compatible processing of Ethernet frames or packets of one or more Ethernet data flow, comprises means for inserting in Ethernet frames or packets of one or more selected Ethernet data flow a four-octet sequence number field after the destination address field (203) and source address field (204) and before the payload field (208). The sequence number field comprises a two-octet field type code (205) distinguishing the sequence number field from existing field types and a two-octet sequence number (206). This way, sequence numbered Ethernet frames or packets (200) can be mixed with non-sequence numbered Ethernet frames or packets of one or more different Ethernet data flow for transmission on a same physical or logical Ethernet interface.

## Description

### Technical Field

Various example embodiments relate to the processing of Ethernet frames or packets. More particularly, embodiments of the invention relate to sequence numbering of Ethernet frames or packets such that the order of Ethernet frames or packets in an atomic Ethernet frame data flow can be preserved when transmitted over plural, bonded physical data interfaces that transfer Ethernet frames or packets, in a backwards compatible manner.

### Background

Currently, the physical upper bound for the bit rate of an optical bit stream on a single optical wavelength channel across the Optical Distribution Network (abbreviated ODN) of a Passive Optical Network (abbreviated PON) lies at 25 Gigabit per second (abbreviated Gb/s). Some service providers feel that this upper bound is not sufficient, and therefore techniques must be implemented that allow to combine the capacity of N optical wavelength channels across the ODN in a single logical channel with increased upper bound for the bit rate, N being an integer number higher than one.

In general, a number of techniques exist or have been proposed to allow grouping of multiple physical data interfaces that transfer Ethernet frames or packets, into a single logical data interface having an aggregate transmission capacity that at least exceeds the capacity of each individual physical member interface of the group, and at best approaches the sum of the transmission capacities of the member physical interfaces of the group.

An atomic Ethernet frame data flow is a flow wherein the order of data frames (or data blocks in case a frame is fragmented) as transmitted by the sending service application must remain unaltered at the receiving service application. This order constraint does not apply to Ethernet frames or packets that are part of different atomic flows. Transmission of Ethernet frames or packets across an aggregate of multiple physical data interfaces that transfer Ethernet frames or packets, and that are bonded into a single logical Ethernet interface by means of an existing or new bonding paradigm, faces the problem of potentially different transmission latencies on each of the physical interfaces, members of the aggregate logical data interface that transfers Ethernet frames or packets. Such differences in transmission latency can find their origin at different layers of the applied data transfer mechanism, like for instance the physical layer, the modulation rate, the scheduling phase, etc. These differences in latency between different physical data interfaces that are bonded into a logical data interface with increased capacity may cause Ethernet frames or packets belonging to the same atomic Ethernet flow to be mis-ordered upon arrival when these Ethernet frames or packets were transmitted in a distributed manner across the different member physical links carrying Ethernet frames or packets. Consequently, use of bonded physical media configurations requires technological measures to guarantee that the original Ethernet frame order is preserved at least within atomic data flows of Ethernet frames or packets.

On point-to-point bonded physical interfaces carrying Ethernet frames or packets with a single aggregate transmitter and receiver logic which by construction both use the same bonding paradigm, any technological measures taken to preserve or restore the order of Ethernet frames or packets can be applied to all Ethernet frame traffic. Consequently, the frame order preserving or restoring techniques can be disruptive and specific for the bonding configuration and equipment. However, on point-to-multipoint physical interfaces, interconnecting multiple end-points of which new ones are supporting new bonding technology, yet legacy end-points ones may not support bonding and only interface with a single physical medium of the bonding group, any technology deployed to ensure Ethernet frame order preservation at least within atomic Ethernet data flows, must be backwards compatible with pre-bonding Ethernet frame formatting at least to such level that legacy end-points that do not support bonding can properly recognize and discard Ethernet frames or packets not intended for them.

### Summary

Amongst others, it is an object of embodiments of the invention to provide a device and method for backwards compatible processing of Ethernet frames or packets ensuring Ethernet frame order preservation at least within atomic Ethernet frames or packets that are for instance transmitted over plural aggregated or bonded physical data interfaces, possibly in a network where legacy end-points are deployed that do not support physical media aggregation or bonding.

This object is achieved, according to a first example aspect of the present disclosure, by an Ethernet frame processor for backwards compatible processing of Ethernet frames or packets of one or more Ethernet data flow as defined by claim 1, the Ethernet frame processor comprising:
- means for inserting in Ethernet frames or packets of one or more selected Ethernet data flow a four-octet sequence number field after the destination address field and source address field and before the payload field in the Ethernet frames or packets, the sequence number field comprising a two-octet field type code distinguishing the sequence number field from existing field types and a two-octet sequence number to thereby generate sequence numbered Ethernet frames or packets that can be mixed with non-sequence numbered Ethernet frames or packets of one or more different Ethernet data flow for transmission on a same physical or logical Ethernet interface.

Thus, embodiments of the invention rely on a specific sequence number field that is inserted in each Ethernet frame of one or more transmitted flows of Ethernet frames or packets. The sequence number field is inserted at the Ethernet protocol layer in a manner that is backwards compatible with the existing standard specifications for this layer. The sequence number field is inserted by an Ethernet frame processor that is for instance integrated in a Physical Medium Entity Aggregation function (abbreviated PME Aggregation Function or PAF), and has the form of a 4-octet long field compatible with the existing Ethernet packet header format by insertion after the 6-octet long destination address field and source address field. In the 4-octet sequence number field, 2 octets are dedicated to contain a field type code that enables to distinguish the sequence number field from the existing type, length and Virtual Local Area Network Identification (abbreviated VLAN ID) fields. The remaining 2 octets of the 4-octet sequence number field are dedicated to contain a sequence number representative for the order of the Ethernet frame in the atomic Ethernet data flow where it forms part of.

Inserting a specific 4-octet sequence number field in Ethernet frames or packets of selected Ethernet data flows is applicable to any type of physical point-to-multipoint transport medium using Ethernet as data transport layer format. Embodiments of the invention consequently can be deployed for use on ITU-T 98x compliant media known as Passive Optical Networks (abbreviated PONs), IEEE 802.3 compliant media known as wired Ethernet networks, WiFi networks, etc. The specific 4-octet sequence number field in embodiments of the invention also can be used on physical point-to-point transport medium using Ethernet as data transport layer format, for instance to improve the efficiency of the Link Aggregation Group (abbreviated LAG) concept.

The Ethernet Link Aggregation Group or LAG concept, introduced by the IEEE 802.3 specification, allows to combine multiple physical Ethernet links in a single logical Ethernet link between two network elements using Ethernet as data transport layer protocol. Without frame order preserving measures, mis-ordering of Ethernet frames or packets might occur on a LAG. Even at a same nominal rate, actual transmission speeds on the physical links can deviate up to approximately 100 ppm (parts per million). On top of that, consecutive Ethernet frames or packets may vary considerably in size and thus in duration. This makes transmission of Ethernet frames or packets across multiple physical member links in a LAG susceptible to transmission latency variation, and hence to mis-ordering of Ethernet frames or packets arriving at the different physical end-points of the LAG. Currently, LAG specific interface logic avoids this from happening by ensuring that Ethernet frames or packets, belonging to a same atomic Ethernet flow wherein mis-ordering of frames must be avoided, are confined to a same physical member link of the LAG at least during periods that the atomic Ethernet flow exhibits Ethernet frame intervals that are smaller than the maximum potential transmission latency difference between the physical LAG members. This is realized by identifying Ethernet frames or packets of a same atomic Ethernet flow through recognizing frame header fields of which the content is specific and invariant for all frames of a single flow. These header fields are used as argument for a hashing function, the result of which indicates the physical member link of the LAG to be used for transmission of the respective Ethernet frame. The LAG paradigm makes four assumptions that are specific to the physical link data layer protocol. According to a first assumption, the overall data traffic to be conveyed across a LAG aggregating multiple physical links does not consist of a single atomic Ethernet data flow, yet consists of plural atomic Ethernet flows. Only such a traffic profile allows to distribute the aggregate load of Ethernet frames or packets to be transported on the logical interface across the multiple physical links in the LAG according to their atomic Ethernet flow membership, thus avoiding mis-ordering within a same atomic Ethernet flow. According to a second assumption, the data rate for each of these atomic Ethernet flows is two or more orders of magnitude smaller than the data rate on a physical member link of the LAG. According to a third assumption, the density of the result space of the applied hash function, using the content of fields in the headers of transmitted Ethernet frames or packets that are specific and invariant within each atomic Ethernet flow, is more or less constant. In other words, the load of data is assumed to be more or less evenly spread across all member physical links of the LAG. According to a fourth assumption, the data rate on each of the member physical links of the LAG is about equal. The latter 3 assumptions are not fundamental requirements of the LAG concept, but they heavily determine the efficiency of the LAG and the risk of frame loss on individual physical member links despite sufficient aggregate transmission capacity. In practice, these assumptions have turned out to be rather common at the time the concept of LAG was introduced, yet they cannot be guaranteed under all conditions and for all service types in large modern networks. As a consequence, the LAG concept has as drawback that it is not very efficient in case the bandwidth of individual atomic Ethernet data flows is not multiple orders of magnitude lower than the bandwidth capacity of each individual physical member link of the logical LAG. Moreover, even if this condition is fulfilled, the static hash function used for distribution of atomic Ethernet data flows still may cause severe load imbalance between the physical member links of the LAG and possibly individual physical path overload in case of pathological distribution of traffic load and flow specific fields. The possible issues with a static hash implementation that allocates flows to physical member links independent of the actual load on these physical member links, can be overcome by a load dependent allocation of a physical member data link in the LAG to a new atomic Ethernet data flow. This however requires a stateful LAG implementation in which a table is kept that records the choice of physical link for each hash result, and an ageing mechanism to free up entries in the table that have not been accessed for a given amount of time. In yet another variant of the LAG concept, the distribution of Ethernet frames or packets across the multiple physical member links of the LAG is no longer determined by their atomic Ethernet flow membership, but according to a simple Round-Robin scheduling mechanism. This however requires insertion of a sequence number per Ethernet frame, for all Ethernet frames or packets, in order to be able to re-sequence mis-ordered Ethernet frames or packets within each atomic Ethernet flow to deal at least with the transmission latency variation caused by at least Ethernet frame size variation.

The 4-octet sequence number field in embodiments of the present invention allows to deploy such more efficient version of the LAG concept on point-to-point Ethernet links with the ability to extend the mechanism to point-to-multipoint media arrangements wherein a mix of (new) bonding end-points and (legacy) not-bonding end-points share the same point-to-multipoint physical links and backwards compatibility with the legacy end-points is required.

In sample embodiments of the Ethernet frame processor defined by claim 2, the one or more selected Ethernet data flow correspond to atomic Ethernet data flows for a particular destination that is identified by a particular Ethernet Destination Address.

Hence, the 4-octet sequence number field can be inserted selectively in Ethernet data flows for a particular destination that is typically characterized by a single destination address.

In sample embodiments of the Ethernet frame processor defined by claim 3, the one or more selected Ethernet data flow correspond to atomic Ethernet data flows from a particular source that is identified by a particular Ethernet Source Address, to a particular destination that is identified by a particular Ethernet Destination Address.

Thus, the 4-octet sequence number field can be inserted selectively in one or plural particular Ethernet data flows, each particular Ethernet data flow typically characterized by a particular source address and destination address tuple, and optionally other protocol fields that remain invariant for the sequence of packets of which the order of arrival needs to be preserved.

Sample embodiments of the Ethernet frame processor defined by claim 4, further comprise:
- means for fragmenting Ethernet frames or packets of the one or more selected Ethernet data flow whose frame length exceeds a predetermined frame threshold length before the sequence number field is inserted to thereby generate sequence numbered Ethernet frame fragments.

Thus, optionally, fragmentation of long Ethernet frames or packets may be implemented to the benefit of reducing the maximum possible transmission latency variation across member physical interfaces of a logical aggregation group or bonding group resulting from Ethernet frame length variation. Long Ethernet frames or packets may for example be defined as Ethernet frames or packets whose length in bytes exceeds a certain predefined maximum length, but the skilled person will appreciate that alternative definitions of long Ethernet frames or packets are conceivable.

Further optionally, in embodiments of the Ethernet frame processor defined by claim 5, the means for fragmenting are configured to insert a two-bit delineation code in either the field type code or the sequence number, wherein the delineation code either indicates for the Ethernet frame fragment where it forms part of whether it is:
- a start of a frame;
- a continuation of a frame;
- an end of a frame; or
- a full frame fragment.

Indeed, in case fragmentation of long Ethernet frames or packets is applied, the frame fragment delineation may be indicated through 2 bits. The 2-bit delineation code may form part of the 4-octet sequence number field, meaning the 2-bit delineation code may be part of the 2-octet field type code in certain embodiments or may be part of the sequence number in alternative embodiments. The 2-bit delineation code can have four values (00, 01, 10, 11) which enables to discriminate four types of frame fragments: a first type of frame fragment contains the start portion of an Ethernet frame, a second type of frame fragment contains a continuation portion of an Ethernet frame, a third type of frame fragment contains an end portion of an Ethernet frame, and a fourth type of frame fragment contains an entire Ethernet frame, e.g. in cases where an Ethernet frame has a length shorter than the predefined maximum length.

Sample embodiments of the Ethernet frame processor, as defined by claim 6, are integrated in a bonding controller comprising at least one processor and at least one memory including computer program code, the at least one memory and computer program code configured to, with the at least one processor, cause the bonding controller to transmit the sequence numbered Ethernet frames or packets of one or more selected Ethernet data flow on a single logical Ethernet interface bonding multiple physical data interfaces that carry Ethernet frames or packets.

Hence, as already explained above, one possible application for the particular Ethernet frame sequence numbering lies in supporting a mix of (new) bonding end-points and (legacy) non-bonding end-points on a point-to-multipoint physical medium. One specific example is a multi-wavelength PON or an Ethernet PON ODN wherein new Optical Network Units (abbreviated ONUs) that support bonding may be mixed with legacy ONUs that do not support bonding. The different wavelengths may be bonded into a single logical interface with increased capacity for large transmissions, for instance software updates, to bonding ONUs, whereas non-bonding ONUs can continue to receive transmissions on a single wavelength that also forms part of one or several bonding groups. The backwards compatible sequence numbering of Ethernet frames or packets that form part of Ethernet data flows that are transmitted over a bonded group of wavelengths ensures frame order preservation for atomic Ethernet flows transmitted to a bonding ONU, whereas legacy ONUs remain able to discriminate frames intended for them from frames that are not intended for them.

Sample embodiments of the Ethernet frame processor, defined by claim 7, are integrated in a link aggregation controller comprising at least one processor and at least one memory including computer program code, the at least one memory and computer program code configured to, with the at least one processor, cause the link aggregation controller to distribute the sequence numbered Ethernet frames or packets of plural Ethernet data flows across multiple physical point-to-point data interfaces that carry Ethernet frames or packets between two network elements.

Indeed, as already indicated above, another possible application for the particular Ethernet frame sequence numbering lies in the realization of a more efficient version of the LAG concept on point-to-point Ethernet links. The backwards compatible sequence numbering here brings the advantage that the assumptions or restrictions for the LAG concept can be released, and Ethernet frames or packets no longer need to be assigned to a physical link based on their atomic Ethernet flow membership (as implemented by the hash function), but may be assigned to a physical link based on a simple Round-Robin scheduling mechanism or alternative fair load distribution mechanism. The backwards compatible sequence numbering avoids that state awareness or ageing mechanisms must be implemented, and allows to increase the load balance across physical links that form part of the LAG in a manner that is compliant with / identical to sequence numbering for bonding in point-to-multipoint configurations.

According to a second aspect, as defined by claim 8, sample embodiments of the invention concern an Ethernet frame receiver for receiving Ethernet frames or packets of one or more Ethernet data flow, the Ethernet frame receiver comprising:
- means for receiving Ethernet frames or packets transmitted on a same physical or logical Ethernet interface;
- means for detecting in the Ethernet frames or packets a four-octet sequence number field after the destination address field and source address field and before the payload field in the Ethernet frames or packets, the sequence number field comprising a two-octet field type code distinguishing the sequence number field from existing field types and a two-octet sequence number;
- means for distinguishing sequence numbered Ethernet frames or packets of one or more selected Ethernet data flow from non-sequence numbered Ethernet frames or packets of one or more different Ethernet data flow based on the field type code; and
- means for ordering received sequence numbered Ethernet frames or packets of a selected Ethernet data flow based on the sequence number.

Indeed, a new Ethernet receiver preferably is able to detect and interpret the 4-octet sequence number field, is able to extract therefrom the 2-octet field type code and distinguish it from other, existing field type codes, and is able to extract the 2-octet sequence number and use the latter for re-sequencing such that at least Ethernet frames or packets that form part of a single atomic Ethernet flow become ordered properly again.

According to a third aspect, as defined by claim 9, embodiments of the invention concern a data frame processing method for backwards compatible processing of Ethernet frames or packets of one or more Ethernet data flow by an Ethernet frame processor, the data frame processing method comprising:
- inserting in Ethernet frames or packets of one or more selected Ethernet data flow a four-octet sequence number field after the destination address field and source address field and before the payload field in the Ethernet frames or packets, the sequence number field comprising a two-octet field type code distinguishing the sequence number field from existing field types and a two-octet sequence number to thereby generate sequence numbered Ethernet frames or packets that can be mixed with non-sequence numbered Ethernet frames or packets of one or more different Ethernet data flow for transmission on a same physical or logical Ethernet interface.

According to a fourth aspect, as defined by claim 10, embodiments of the invention concern a method for receiving Ethernet frames or packets of one or more Ethernet data flow by an Ethernet frame receiver, the method comprising:
- receiving Ethernet frames or packets transmitted on a same physical or logical data interface;
- detecting in the Ethernet frames or packets a four-octet sequence number field after the destination address field and source address field and before the payload field in the Ethernet frames or packets, the sequence number field comprising a two-octet field type code distinguishing the sequence number field from existing field types and a two-octet sequence number;
- distinguishing sequence numbered Ethernet frames or packets of one or more selected Ethernet data flow from non-sequence numbered Ethernet frames or packets of one or more different Ethernet data flow based on the field type code; and
- ordering received sequence numbered Ethernet frames or packets of a selected Ethernet data flow based on the sequence number.

### Brief Description of the Drawings

Some example embodiments will now be described with reference to the accompanying drawings.
Fig. 1 shows a Passive Optical Network comprising sample embodiments of the Ethernet frame processor 191 and Ethernet frame receiver 152 according to the invention;
Fig. 2 illustrates an Ethernet frame 200 generated by a first sample embodiment of the Ethernet frame processor according to the invention;
Fig. 3 illustrates an Ethernet frame 300 generated by a second sample embodiment of the Ethernet frame processor according to the invention;
Fig. 4 illustrates an Ethernet frame 400 generated by a third sample embodiment of the Ethernet frame processor according to the invention; and
Fig. 5 shows an example embodiment of a suitable computing system 500 for performing one or several steps in embodiments of the invention.

### Detailed Description of Embodiment(s)

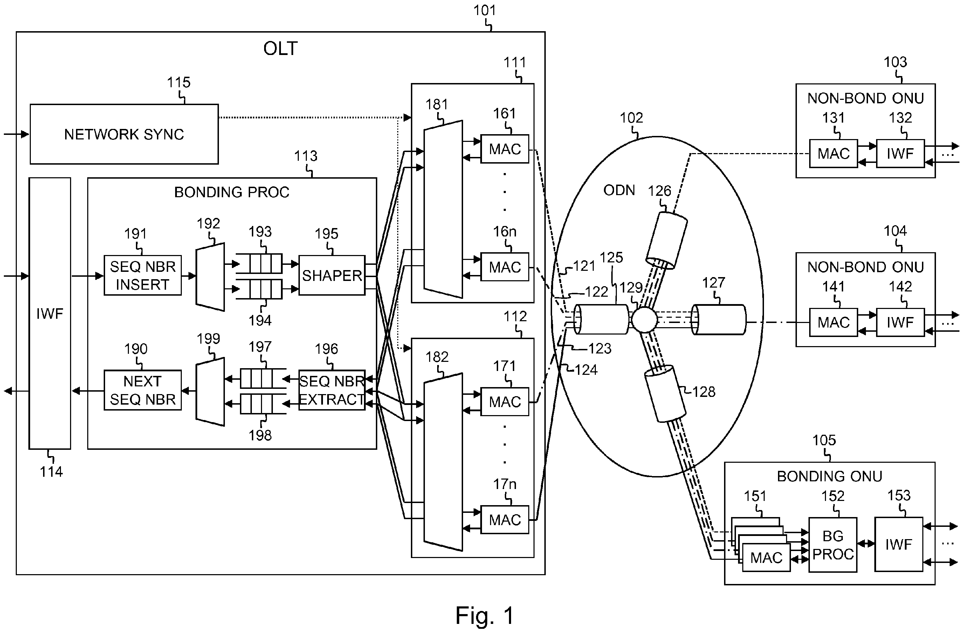

Fig. 1 shows a Passive Optical Network comprising an Optical Line Termination 101 (abbreviated OLT) located in the Central Office (abbreviated CO), an Optical Distribution Network 102 (abbreviated ODN), and three Optical Network Units 103, 104, 105 (abbreviated ONUs) located in Customer Premises Equipment (abbreviated CPE) or in an intermediate cabinet. The OLT 101 comprises a first optical transceiver 111 and second optical transceiver 112, a bonding processor 113, an interworking function 114 (abbreviated IWF) and a network synchronization unit 115. The first transceiver 111 has an optical multiplexer/demultiplexer 181 and n PON Medium Access Control units 161 ... 16n (abbreviated MAC units), n being a positive integer number. Similarly, the second transceiver 112 has an optical multiplexer/demultiplexer 182 and n PON Medium Access Control units 171 ... 17n, n being a positive integer number. The PON MAC units 161 ... 16n, 171 ... 17n each control access to/from a single physical Ethernet interface, represented by a single wavelength channel in Fig. 1. MAC unit 161 for instance controls access to/from a single wavelength channel 121 that is represented by a short-dashed line in Fig. 1; MAC unit 16n controls access to/from a single wavelength channel 122 that is represented by a long-dashed line in Fig. 1; MAC unit 171 controls access to/from a single wavelength channel 123 that is represented by a dot-dashed line in Fig. 1; and MAC unit 17n controls access to/from a single wavelength channel 124 that is represented by a solid line in Fig. 1. Bonding processor 113 comprises a sequence number insertion unit 191, a demultiplexer or load balancer 192, per-channel queues 193 and 194, a per-channel transmit shaper 195, a sequence number extraction and data block dispatcher unit 196, per-channel receiving queues 197 and 198, and a next sequence number comparison and scheduling unit 190. The ODN 102 comprises optical fibres 125, 126, 127 and 128 and optical splitters/multiplexers 129 coupling the ONUs 103, 104 and 105 to the OLT 101. The optical fibres 125, 126, 127 and 128 each convey the four earlier mentioned single wavelength channels 121, 122, 123 and 124. The first ONU 103 is a legacy ONU that does not support bonding. The first ONU 103 is configured to receive/transmit Ethernet frames or packets via single wavelength channel 121 and thereto comprises a MAC unit 131 and interworking function 132. The second ONU 104 also is a legacy ONU that does not support bonding. This second ONU 104 is configured to receive/transmit Ethernet frames or packets via single wavelength channel 123 and thereto comprises a MAC unit 141 and interworking function 142. The third ONU 105 supports bonding of multiple single wavelength channels 121, 122, 123 and 124 into a single logical interface and thereto comprises per-channel MAC units 151, a bonding group processor 152 and an interworking function 153.

In the PON drawn in Fig. 1, OLT 101 communicates with bonding ONU 105 using a bonded group of four physical Ethernet interfaces representing four single wavelength channels 121, 122, 123 and 124 across which Ethernet frames or packets destined for ONU 105 are transmitted in a load-balanced manner. In order to enable the OLT 101 to use the single wavelength channel 121 also for communication with legacy ONU 103 and to use the single wavelength channel 123 also for communication with legacy ONU 104 hence enabling to mix bonding ONU 105 with legacy ONUs 103 and 104, using the same physical medium interfaces at least partially, Ethernet frames or packets transmitted by OLT 101 become sequence numbered in a particular, backwards compliant manner. Ethernet frames or packets received from interworking function 114 are sequence numbered by the sequence number insertion unit 191. The sequence numbering is done per destination, which means that Ethernet frames or packets of a data flow destined to ONU 105 are sequence numbered separately from Ethernet frames of a data flow destined to another bonding ONU. The sequence numbered Ethernet frames or packets are demultiplexed or distributed across per-channel queues 193, 194 by demultiplexer 192 according to some load distribution algorithm. Shaper 195 schedules the transmission of the Ethernet frames or packets by selecting Ethernet frames or packets from the per-channel queues 193, 194 and assigning the selected Ethernet frames or packets to the respective MAC units 161 ... 16n, 171 ... 17n for transmission thereby over the respective physical single wavelength Ethernet interfaces. In between the shaper 195 and the MAC units 161 ... 16n, 171 ... 17n, the transceivers 111 and 112 comprise a downstream/upstream multiplexer/demultiplexer to separate downstream traffic transmitted to ONUs 103, 104 and 105 by OLT 101 from upstream traffic received from ONUs 103, 104 and 105 by OLT 101. Ethernet frames or packets received by the MAC units 161 ... 16n, 171 ... 17n are routed to sequence number extraction and data block dispatcher unit 196 by the multiplexer/demultiplexers 181 and 182. The sequence number extraction and data block dispatcher unit 196 stores the received Ethernet frames or packets in per-channel queues 197, 198 and the multiplexer 199 serves the different queues 197, 198 such that for sequence numbered frames or fragments the next sequence number Ethernet frame or fragment from a bonding ONU becomes forwarded to the interworking function 114 via next sequence number comparison and scheduling unit 190. The multiplexer 199 and next sequence number comparison and scheduling unit 190 in other words simply pass the received Ethernet frames or packets received from legacy ONUs 103, 104 and re-sequence and re-assemble the received Ethernet frames or packets received from bonding ONU 105 such that any possible disorder within atomic Ethernet flows resulting from the bonding is restored before the Ethernet frames or packets are transferred to a different communications network by interworking function 114.

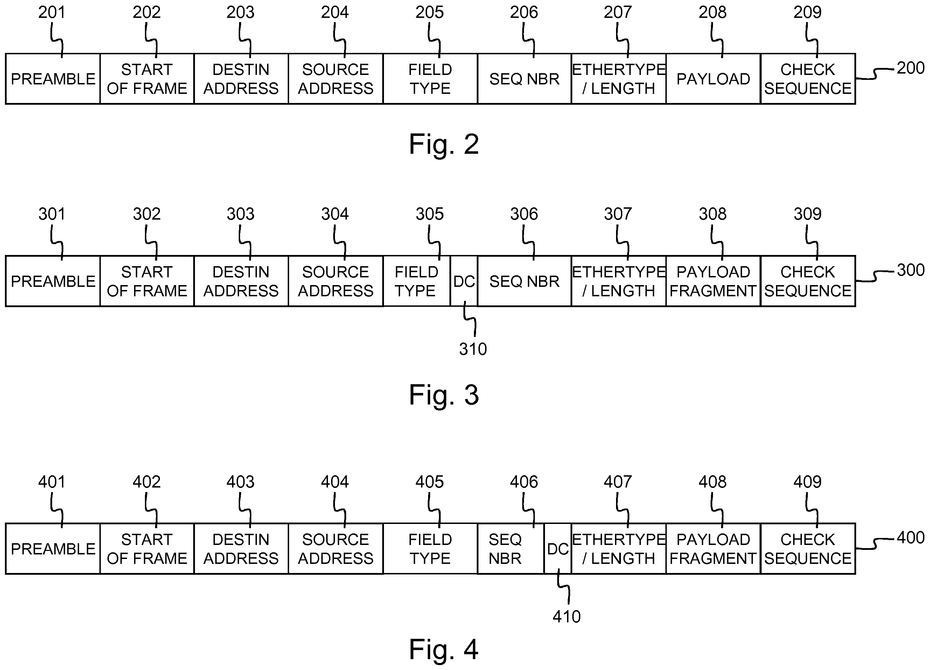

The sequence numbering applied by sequence number insertion unit 191 is illustrated by Fig. 2. The Ethernet frame 200 according to the standard IEEE 803.2 contains a 7-octet preamble field 201 with pattern of alternating 1 and 0 bits allowing network devices to synchronize their receiver clocks, a 1-octet start of frame delimiter field 202 with a predetermined bit pattern allowing byte synchronization and marking a new frame, a 6-octet destination address field 203 with MAC address of the destination endpoint, a 6-octet source address field 204 with MAC address of the source endpoint, a 2-octet Ethertype or length field 207 with indication of the type of Ethernet frame or the length of the Ethernet frame, a payload section 208 of variable length ranging from 46 octets up to 1500 octets, and 4-octet frame check sequence field 209 with 32 bit long cyclic redundancy check (abbreviated CRC) sequence. As a result of the operation of the sequence number insertion unit 191, Ethernet frame 200 further contains a 4-octet sequence number field consisting of a 2-octet field type code 205 and a 2-octet sequence number 206. The sequence number insertion unit 191 hence exploits the optional 4-octet tag foreseen in the IEEE 802.3 Ethernet standard to insert immediately after the destination address and source address a 2-octet field type code 205, i.e. a predetermined 16-bit sequence that enables to distinguish the sequence number field from existing type, length and VLAN ID field types, and a 16-bit sequence number 206. The 16-bit sequence number is applied per Ethernet data flow such that successive frames of an atomic Ethernet data flow carry subsequent numbers, as a result of which the order of Ethernet frames or packets can be restored in any atomic Ethernet data flow based on the sequence numbers.

In Fig. 1, the bonding ONU 105 has a bonding group processor 152 that is configured to detect presence of the sequence number field in Ethernet frames or packets that are received via the plural bonded interfaces 151, and to re-sequence Ethernet frames or packets belonging to a single atomic Ethernet flow and possibly disordered as a consequence of latency variations between the different single wavelength channels 121, 122, 123, 124 over which these Ethernet frames or packets have been sent as a result of the bonding. The properly ordered Ethernet frames or packets are handed over to the interworking function 153 for transfer to a different communication network in case the ONU 105 forms part of a cabinet or for transfer to higher layer applications in case the ONU 105 forms part of customer premises equipment.

The legacy ONUs 103 and 104 in parallel continue to receive Ethernet frames or packets that are transmitted using single wavelength channels 121 and 123 that are also to convey part of the bonded traffic destined for bonding ONU 105. Ethernet frames or packets destined for these legacy ONUs 103 and 104 continue to arrive in proper order as they are sent sequentially over a single wavelength channel. The respective MAC units 131 and 141 consequently can process these Ethernet frames or packets in the traditional way and hand-over the Ethernet frames or packets respectively to interworking functions 132 and 142 without any re-sequencing needs. Ethernet frames or packets that are sent over the single wavelength channels 121 or 123 and which arrive at legacy ONUs 103 or 104 although they are not destined for these ONUs, are discarded by these ONUs because they contain a different destination address. They are sequence numbered Ethernet frames or packets that are destined for bonding ONU 105 and represent partial traffic of the bonding group. Although they are sequence numbered and arrive at the legacy ONUs 103 and 104, they will not prevent the legacy ONUs 103 and 104 from recognizing and processing Ethernet frames or packets that are really intended for them. The particular 4-octet sequence number field introduced to enable sequence restoration in bonded groups, does not prevent to mix such bonded traffic with non-bonded traffic and allow deployment of bonding ONUs in a network with legacy ONUs, both types of ONUs using the same physical medium interfaces, e.g. the same optical wavelength channels in the example of a PON.

Optionally, fragmentation of long Ethernet frames or packets can be supported in embodiments of the Ethernet frame processor in order to reduce the maximum transmission latency variation across member physical interfaces of a logical bonding interface. When Ethernet frames or packets are fragmented into Ethernet frame fragments a delineation code must be inserted in the Ethernet frame fragments. This delineation code may for example consist of 2 bits and be integrated in the field type code or sequence number that form part of the 4-octet sequence number field inserted by the sequence number insertion unit 191. A 2-bit delineation code (abbreviated DC) for example allows to distinguish fragments that contain the start of an Ethernet frame (e.g. DC = 00), fragments that contain a continuation portion of an Ethernet frame (e.g. DC = 01), fragments that contain an end portion of an Ethernet frame (e.g. DC = 10) and fragments that contain an entire Ethernet frame (e.g. DC = 11).

In Fig. 3, 300 represents an Ethernet frame fragment as generated by embodiments of the Ethernet frame processor according to the invention. Ethernet frame fragment 300 contains a 7-octet preamble field 301 with pattern of alternating 1 and 0 bits allowing network devices to synchronize their receiver clocks, a 1-octet start of frame fragment delimiter field 302 with a predetermined bit pattern allowing byte synchronization and marking a new frame fragment, a 6-octet destination address field 303 with MAC address of the destination endpoint, a 6-octet source address field 304 with MAC address of the source endpoint, a 2-octet Ethertype or length field 307 with indication of the type of Ethernet frame fragment or the length of the Ethernet frame fragment, a payload section 308 with reduced length to contain a fragment of the payload of the Ethernet frame where it is generated from, and a 4-octet frame check sequence field 309 with 32 bit long cyclic redundancy check (abbreviated CRC) sequence. As a result of the operation of an embodiment of the Ethernet frame processor according to the invention with fragmenting function, the Ethernet frame fragment 300 further contains a 4-octet sequence number field consisting of a 2-octet field type code 305 and a 2-octet sequence number 306. The Ethernet frame processor inserts immediately after the destination address and source address a predetermined 14-bit code that enables to distinguish the sequence number field from existing type, length and VLAN ID field types, and a 2-bit fragment delineation code 310 (abbreviated DC) that jointly fill the 2-octet field type field. Further, a 16-bit sequence number 306 is inserted. The 16-bit sequence number is applied per Ethernet data flow such that successive frame fragments of an atomic Ethernet data flow carry subsequent numbers, as a result of which the order of Ethernet frame fragments and the Ethernet frames or packets themselves can be restored in any atomic Ethernet data flow based on the sequence numbers and delineation codes.

In Fig. 4, 400 represents another Ethernet frame fragment as generated by embodiments of the Ethernet frame processor according to the invention. Ethernet frame fragment 400 contains a 7-octet preamble field 401 with pattern of alternating 1 and 0 bits allowing network devices to synchronize their receiver clocks, a 1-octet start of frame fragment delimiter field 402 with a predetermined bit pattern allowing byte synchronization and marking a new frame fragment, a 6-octet destination address field 403 with MAC address of the destination endpoint, a 6-octet source address field 404 with MAC address of the source endpoint, a 2-octet Ethertype or length field 407 with indication of the type of Ethernet frame fragment or the length of the Ethernet frame fragment, a payload section 408 with reduced length to contain a fragment of the payload of the Ethernet frame where it is generated from, and a 4-octet frame check sequence field 409 with 32 bit long cyclic redundancy check (abbreviated CRC) sequence. As a result of the operation of an embodiment of the Ethernet frame processor according to the invention with fragmenting function, the Ethernet frame fragment 400 further contains a 4-octet sequence number field consisting of a 2-octet field type code 405 and a 2-octet sequence number 406. The Ethernet frame processor inserts immediately after the destination address and source address a predetermined 16-bit code that enables to distinguish the sequence number field from existing type, length and VLAN ID field types. Further, a 14-bit sequence number 406 is inserted and a 2-bit fragment delineation code 410 (abbreviated DC) that jointly fill the 2-octet sequence number. The 14-bit sequence number is applied per Ethernet data flow such that successive frame fragments of an atomic Ethernet data flow carry subsequent numbers, as a result of which the order of Ethernet frame fragments and the Ethernet frames or packets themselves can be restored in any atomic Ethernet data flow based on the sequence numbers and delineation codes.

By preference the field type code, sequence numbers and delineation codes are to be included in future versions of the IEEE 802.3 Ethernet standard in order to avoid interoperability issues between end-points using the sequence numbers.

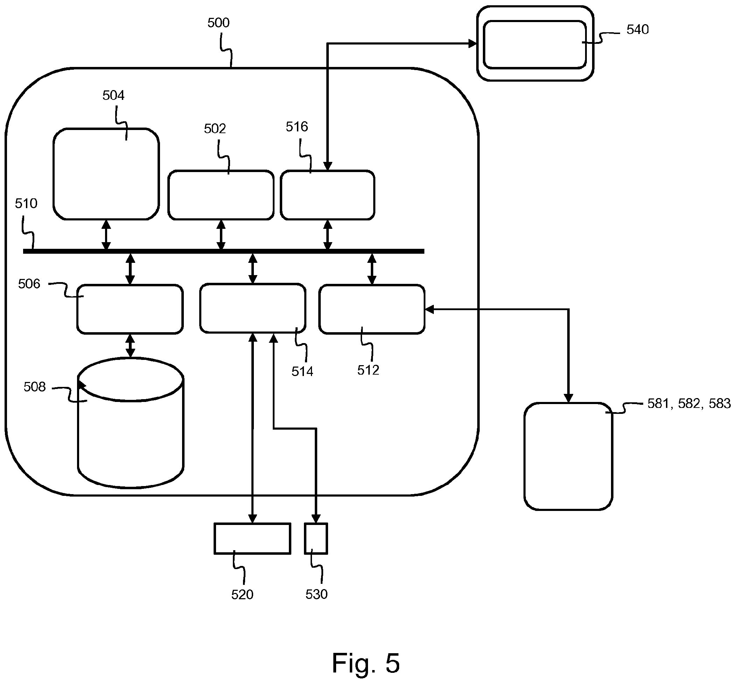

Fig. 5 shows a suitable computing system 500 enabling to implement embodiments of the Ethernet frame processor according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used. Computing system 500 could thus correspond to the sequence number insertion unit 191 or bond group processors 113, 152 in the embodiment illustrated by Fig. 1.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An Ethernet frame processor (191) for backwards compatible processing of Ethernet frames or packets of one or more Ethernet data flow, said Ethernet frame processor (191) comprising:
- means for inserting in Ethernet frames or packets of one or more selected Ethernet data flow a four-octet sequence number field after the destination address field (203) and source address field (204) and before the payload field (208) in said Ethernet frames or packets, said sequence number field comprising a two-octet field type code (205) distinguishing said sequence number field from existing field types and a two-octet sequence number (206) to thereby generate sequence numbered Ethernet frames or packets (200) that can be mixed with non-sequence numbered Ethernet frames or packets of one or more different Ethernet data flow for transmission on a same physical or logical Ethernet interface.

2. An Ethernet frame processor (191) according to claim 1, wherein said one or more selected Ethernet data flow correspond to atomic Ethernet data flows for a particular destination (105) that is identified by a particular Ethernet Destination Address (203).

3. An Ethernet frame processor (191) according to claim 1, wherein said one or more selected Ethernet data flow correspond to atomic Ethernet data flows from a particular source that is identified by a particular Ethernet Source Address (204), to a particular destination that is identified by a particular Ethernet Destination Address (203).

4. An Ethernet frame processor (191) according to one of the preceding claims, further comprising:
- means for fragmenting Ethernet frames or packets of said one or more selected Ethernet data flow whose frame length exceeds a predetermined frame threshold length before said sequence number field is inserted to thereby generate sequence numbered Ethernet frame fragments (300; 400).

5. An Ethernet frame processor (191) according to claim 4, wherein said means for fragmenting are configured to insert a two-bit delineation code (310; 410) in either said field type code or said sequence number, wherein said delineation code (310; 410) either indicates for the Ethernet frame fragment (300; 400) where it forms part of whether it is:
- a start of a frame;
- a continuation of a frame;
- an end of a frame; or
- a full frame fragment.

6. An Ethernet frame processor (191) according to one of the preceding claims, said Ethernet frame processor (191) being integrated in a bonding controller (113) comprising at least one processor and at least one memory including computer program code, the at least one memory and computer program code configured to, with the at least one processor, cause the bonding controller (113) to transmit said sequence numbered Ethernet frames or packets (200) of one or more selected Ethernet data flow on a single logical Ethernet interface, bonding multiple physical data interfaces that carry Ethernet frames or packets.

7. An Ethernet frame processor according to one of the preceding claims, said Ethernet frame processor being integrated in a link aggregation controller comprising at least one processor and at least one memory including computer program code, the at least one memory and computer program code configured to, with the at least one processor, cause the link aggregation controller to distribute said sequence numbered Ethernet frames or packets of plural Ethernet data flows across multiple physical point-to-point data interfaces that carry Ethernet frames or packets between two network elements.

8. An Ethernet frame receiver (152) for receiving Ethernet frames or packets of one or more Ethernet data flow, said Ethernet frame receiver (152) comprising:
- means for receiving Ethernet frames or packets (200) transmitted on a same physical or logical Ethernet interface;
- means for detecting in said Ethernet frames or packets (200) a four-octet sequence number field after the destination address field (203) and source address field (204) and before the payload field (208) in said Ethernet frames or packets (200), said sequence number field comprising a two-octet field type code (205) distinguishing said sequence number field from existing field types and a two-octet sequence number (206);
- means for distinguishing sequence numbered Ethernet frames or packets (200) of one or more selected Ethernet data flow from non-sequence numbered Ethernet frames or packets of one or more different Ethernet data flow based on said field type code (205); and
- means for ordering received sequence numbered Ethernet frames or packets (200) of a selected Ethernet data flow based on said sequence number (206).

9. A data frame processing method for backwards compatible processing of Ethernet frames or packets of one or more Ethernet data flow by an Ethernet frame processor (191), said data frame processing method comprising:
- inserting in Ethernet frames or packets of one or more selected Ethernet data flow a four-octet sequence number field after the destination address field (203) and source address field (204) and before the payload field (208) in said Ethernet frames or packets, said sequence number field comprising a two-octet field type code (205) distinguishing said sequence number field from existing field types and a two-octet sequence number (206) to thereby generate sequence numbered Ethernet frames or packets (200) that can be mixed with non-sequence numbered Ethernet frames or packets of one or more different Ethernet data flow for transmission on a same physical or logical Ethernet interface.

10. A method for receiving Ethernet frames or packets (200) of one or more Ethernet data flow by an Ethernet frame receiver (152), said method comprising:
- receiving Ethernet frames or packets (200) transmitted on a same physical or logical data interface that carries Ethernet frames or packets;
- detecting in said Ethernet frames or packets (200) a four-octet sequence number field after the destination address field (203) and source address field (204) and before the payload field (208) in said Ethernet frames or packets (200), said sequence number field comprising a two-octet field type code (205) distinguishing said sequence number field from existing field types and a two-octet sequence number (206);
- distinguishing sequence numbered Ethernet frames or packets (200) of one or more selected Ethernet data flow from non-sequence numbered Ethernet frames or packets of one or more different Ethernet data flow based on said field type code (205); and
- ordering received sequence numbered Ethernet frames or packets (200) of a selected Ethernet data flow based on said sequence number (206).
